# EUROPEAN PATENT APPLICATION

(11) **EP 4 421 712 A1**
(43) Date of publication of application: **28.08.2024**
(21) Application number: 23218428.3
(22) Date of filing: 20.12.2023
(51) Int. Cl.: G06Q 20/20, G06Q 20/38, G06Q 30/0238, G07G 1/00, G07G 1/14

(54) **POINT OF SALE TERMINAL, METHOD PERFORMED THEREBY, AND NON-TRANSITORY COMPUTER READABLE MEDIUM**

(30) Priority: 22.02.2023 JP 2023026519
(71) Applicant: Toshiba TEC Kabushiki Kaisha, Tokyo 141-8562 (JP)
(72) Inventor: Tou, Gyougei, Tokyo, 141-8562 (JP)
(74) Representative: Bandpay & Greuter

(57) **Abstract**

A point of sale terminal for registering items at a store includes a display, a memory that stores first data that associates items with groups, and second data that associates each group with a flag indicating whether a price of an item associated with the group is to be excluded from a total amount of purchased items for a service to be provided, and a processor configured to register items for purchase, calculate a first total amount of all registered items, calculate a second total amount of one or more registered items belonging to one or more groups each associated with the flag indicating that a price of an item associated with the group is not to be excluded from a total amount of purchased items for the service to be provided, and control the display to display the first and second total amounts.

## Description

### FIELD

Embodiments of the present disclosure relates to a point of sale (POS) terminal, a method performed thereby, and a non-transitory computer readable medium.

### BACKGROUND

At the time of checkout at a store, there may be a requirement for a retail store to apply a discount to the total amount of purchased items when that amount excluding a specific item, such as a gift certificate, a prepaid card, and a newspaper, exceeds a predetermined amount. In order to meet such a requirement, a mechanism is required by which a store clerk in charge of checkout can easily confirm the total amount of purchased items excluding such a specific item belonging to a specific classification.

### DISCLOSURE OF THE INVENTION

To this end, a point of sale (POS) terminal for registering items for purchase at a store, a method performed by a point of sale (POS) terminal for registering items for purchase at a store, and non-transitory computer readable medium storing a program causing a computer to execute said method.

### DESCRIPTION OF THE DRAWINGS

FIG. 1 is a schematic diagram showing a configuration of a POS system.
FIG. 2 is a schematic diagram showing a data structure of a merchandise data record.
FIG. 3 is a hardware block diagram of a POS terminal.
FIG. 4 is a schematic diagram showing a data structure of a department table stored in the POS terminal.
FIG. 5 is a schematic diagram showing a main memory area in a main memory of the POS terminal.
FIG. 6 is a functional block diagram of the POS terminal.
FIG. 7 is a flowchart of information processing executed by the POS terminal in response to input of a merchandise code.
FIG. 8 is a flowchart of information processing executed by POS terminal in response to input of a subtotal key signal.
FIG. 9 is an example of a registration screen displayed on a display of the POS terminal.
FIG. 10 is an example of a subtotal screen displayed on the display.
FIG. 11 is a schematic diagram showing a data structure of a set amount memory in a POS terminal.
FIG. 12 is a functional schematic diagram of the POS terminal.
FIG. 13 is a flowchart of information processing executed by the POS terminal in response to input of a subtotal key signal.
FIG. 14 is an example of a subtotal screen displayed on a display of the POS terminal.
FIG. 15 is a schematic diagram showing a data structure of a department table stored in a POS terminal.
FIG. 16 is a schematic diagram showing a data structure of a ticket type table stored in the POS terminal.
FIG. 17 is a schematic diagram showing a main memory area in a main memory of the POS terminal.
FIG. 18 is a schematic diagram showing a main memory area in the main memory of the POS terminal.
FIG. 19 is a flowchart of information processing executed by the POS terminal in response to input of a merchandise code.
FIG. 20 is a flowchart of information processing executed by the POS terminal in response to input of a subtotal key signal.
FIG. 21 is an example of a subtotal screen displayed on a display of the POS terminal.

### DETAILED DESCRIPTION

Embodiments of the disclosure provide a sales data processing device capable of easily checking the amount of purchased merchandise items excluding merchandise items belonging to specific classifications.

In one embodiment, a POS terminal for registering items for purchase at a store, comprises a display, a memory that stores first data that associates a plurality of items sold at the store with a plurality of predetermined groups, and second data that associates each of the groups with a flag indicating whether a price of an item associated with the group is to be excluded from a total amount of purchased items for a particular service to be provided by the store; and a processor. The processor is configured to: register a plurality of items for purchase, calculate a first total amount of all of the registered items, calculate a second total amount of one or more of the registered items belonging to one or more of the groups each associated with the flag indicating that a price of an item associated with the group is not to be excluded from a total amount of purchased items for the particular service to be provided by the store, and control the display to display the first and second total amounts.

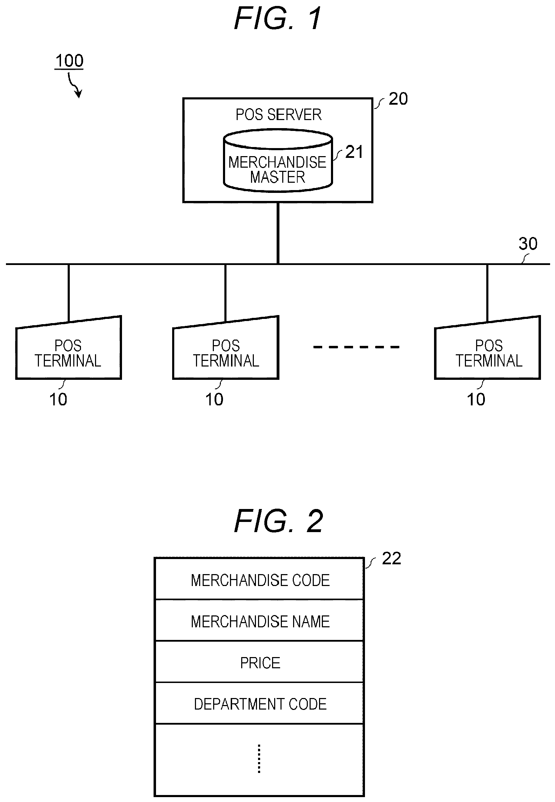

Hereinafter, sales data processing devices in first through third embodiments capable of easily checking the amount of purchased merchandise items excluding merchandise items belonging to specific classifications will be described. First, a schematic configuration of a POS system 100 and a hardware configuration of a POS terminal 10 common to those embodiments will be described with reference to FIGS. 1 to 3.

### Schematic Configuration of POS System

FIG. 1 is a schematic diagram showing a configuration of the POS system 100. The POS system 100 includes a plurality of POS terminals 10 and a POS server 20, which is a host device of the POS terminals 10, connected by a communication network 30. The communication network 30 is typically a local area network (LAN). The LAN may be a wired LAN or a wireless LAN.

The POS terminal 10 is an electronic device functioning as a sales data processing device. Each POS terminal 10 is disposed at a checkout place in a store. Many stores into which the POS system 100 is introduced have one or more sales floors where merchandise items are displayed and a checkout place where payment is performed. In the checkout place, there is a store clerk in charge of checkout, a so-called cashier. A purchaser or a customer picks up merchandise items to be purchased on the sales floor, moves to the checkout place, and requests checkout to the cashier. The cashier operates the POS terminal 10 to register sales data of the merchandise items for purchase. Since the price of the merchandise items is calculated by registering the sales data, the cashier receives payment of the price from the purchaser.

The POS server 20 includes a merchandise item master database 21 (hereinafter simply referred to as the merchandise master 21). The merchandise master 21 stores a merchandise data record 22 (see FIG. 2) generated for each merchandise. As shown in FIG. 2, the merchandise data record 22 is a set of data fields including a merchandise code, a merchandise name, a price, and a department code. The merchandise code is a unique code set for each merchandise item in order to identify each merchandise item. The merchandise name is the name of the merchandise item identified by the merchandise code, and the price is a price for one merchandise item, that is, a unit price. The department code is an identification code of a department to which the merchandise item belongs. Each merchandise item may be classified into a plurality of departments according to an attribute thereof. The department code is a unique code set for each department in order to individually identify each department. The merchandise data record 22 is used when sales data of the merchandise item is registered at a POS terminal 10.

### [Hardware Configuration of POS Terminal]

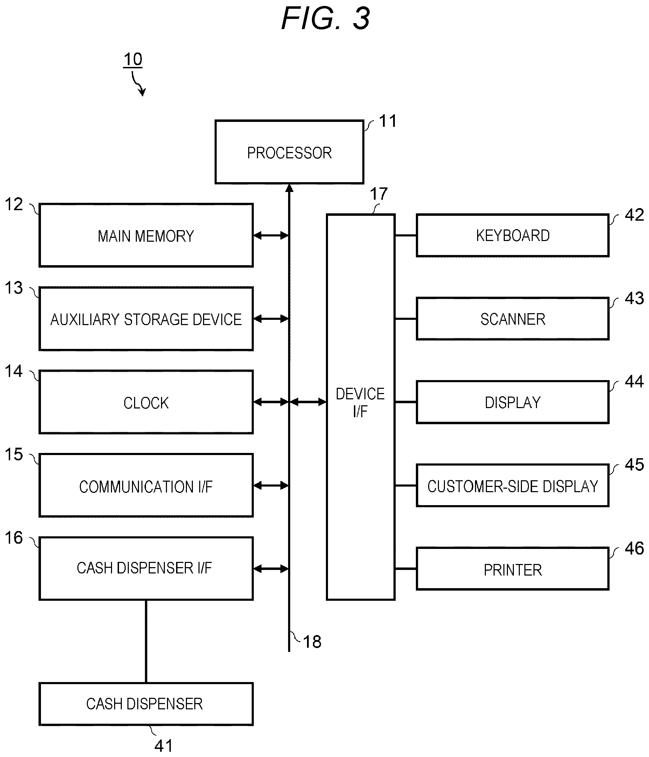

FIG. 3 is a hardware block diagram of the POS terminal 10. The POS terminal 10 includes a processor 11, a main memory 12, an auxiliary storage device 13, a clock 14, a communication interface (I/F) 15, a cash dispenser interface (I/F) 16, a device interface (I/F) 17, and a system transmission path 18. The system transmission path 18 includes an address bus, a data bus, or the like. In the POS terminal 10, the processor 11, the main memory 12, the auxiliary storage device 13, the clock 14, the communication interface 15, the cash dispenser interface 16, and the device interface 17 are connected to each other via the system transmission path 18.

The processor 11 corresponds to a core component of the POS terminal 10. The processor 11 controls each unit of the POS terminal 10 to perform various functions thereof according to an operating system or an application program. The processor 11 is, for example, a central processing unit (CPU).

The main memory 12 includes a nonvolatile memory area and a volatile memory area. The nonvolatile memory area of the main memory 12 stores the operating system or the application program. The nonvolatile or volatile memory area of the main memory 12 may store data necessary for the processor 11 to execute processing for controlling each unit. The volatile memory area is used as a work area in which data is appropriately rewritten by the processor 11. The nonvolatile memory area is, for example, a read only memory (ROM). The volatile memory area is, for example, a random access memory (RAM).

For example, the auxiliary storage device 13 includes an electric erasable programmable read-only memory (EEPROM), a hard disk drive (HDD), a solid state drive (SSD), or the like. The auxiliary storage device 13 stores data used when the processor 11 performs various types of processing, data generated by the processing in the processor 11, or the like. The auxiliary storage device 13 may store the application program.

The clock 14 is a real-time clock that maintains a date and time. The processor 11 processes the date and time maintained by the clock 14 as a current date and time.

The communication interface 15 is a network interface circuit connectable to the communication network 30. The communication interface 15 performs data communication with the POS server 20 connected to the communication network 30. The communication interface 15 can also perform data communication with devices other than the POS server 20 via the communication network 30.

The cash dispenser interface 16 is an interface circuit connectable to an automatic cash dispenser 41. The automatic cash dispenser 41 is a known device that dispenses, from a dispensing port, bills and coins calculated based on cash inserted from an inlet. The cash dispenser interface 16 exchanges data signals necessary for dispensing bills and coins with the automatic cash dispenser 41.

The device interface 17 is an interface circuit connectable to various input and output devices such as a keyboard 42, a scanner 43, a display 44, a customer-side display 45, and a printer 46. The device interface 17 performs data communication with an input and output device connected to the device interface 17.

The keyboard 42 is an input device including various hard keys such as ten keys, a multiplication key, a clear key, a subtotal key, and a cash total key. The ten keys are used for inputting a numerical value. The multiplication key is used for instructing that the input numerical value is a multiplier. The clear key is used for clearing the input numerical value. The subtotal key is used for outputting a subtotal amount. The cash total key is used for instructing settlement of a cash transaction.

The scanner 43 is an input device capable of reading a bar code. A bar code representing a merchandise code unique to merchandise is attached to a merchandise item sold on a sales floor. When a bar code attached to a merchandise item is read by the scanner 43, the merchandise code thereof is input to the POS terminal 10.

The display 44 is an output device capable of displaying a merchandise name, a price, a total amount, or the like of a merchandise item to be purchased. Information displayed on the display 44 can be viewed by a cashier who operates the POS terminal 10.

The customer-side display 45 is an output device capable of displaying a merchandise name, a price, a total amount, or the like of a merchandise item to be purchased. Information displayed on the customer-side display 45 can be viewed by a purchaser who performs payment on the POS terminal 10.

The printer 46 is an output device capable of printing and issuing a transaction receipt. The purchaser who has finished the payment can receive the transaction receipt.

For example, when a bar code of a merchandise item is read by the scanner 43, the POS terminal 10 acquires the merchandise data record 22 including the merchandise code acquired from the bar code, and generates merchandise sales data including the merchandise code, a merchandise name, a price, a department code, the number of sales items, and a sales amount. The number of sales items can be a multiple value when a value is input by the ten numeric keys and the multiplication key of the keyboard 42, and is " 1" when a multiplier value is not input. The sales amount is an amount calculated by multiplying the price by the number of sales items. The POS terminal 10 registers the merchandise sales data in the main memory 12. The POS terminal 10 displays the merchandise name, the price, or the like in the merchandise sales data on the display 44 and the customer-side display 45.

Thereafter, when the subtotal key is pressed, the POS terminal 10 displays, on the display 44 and the customer-side display 45, the subtotal amount calculated based on the merchandise sales data registered in the main memory 12. When the cash total key is pressed, the POS terminal 10 calculates the number of bills and coins to be dispensed by subtracting the subtotal amount from a total amount of cash inserted into the automatic cash dispenser 41, that is, the deposit amount, and controls the automatic cash dispenser 41 to dispense the bills and coins. The POS terminal 10 also drives the printer 46 to issue a transaction receipt.

The devices connected to the device interface 17 are not limited to the keyboard 42, the scanner 43, the display 44, the customer-side display 45, and the printer 46. For example, a card reader that reads data of a point card or a credit card, or a cashless settlement terminal that processes cashless settlement such as electronic money or code settlement may be connected to the device interface 17.

### First Embodiment

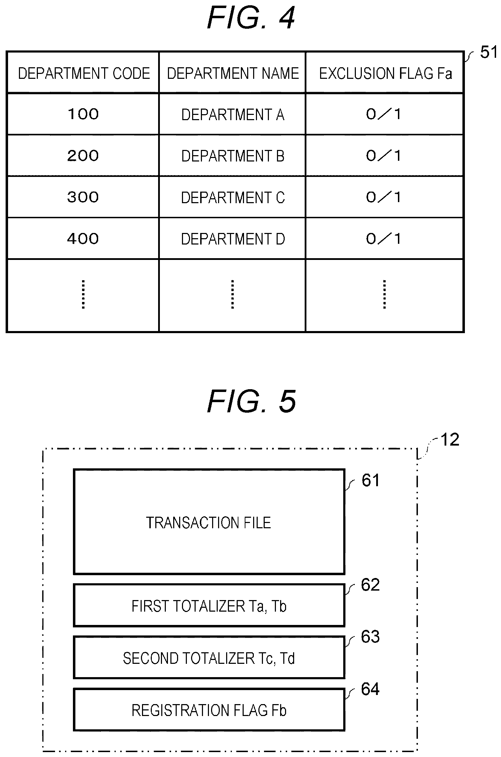

Next, a first embodiment will be described with reference to FIGS. 4 to 10.

The first embodiment exemplifies a POS terminal 10 suitable for use in a store that issues a service or discount ticket to a purchaser when a total amount of purchased merchandise items excluding merchandise items sold at specific departments of a store is equal to or greater than a set amount. The type of the service ticket is not particularly limited. For example, a point ticket, a coupon, an invitation ticket, or the like may be used. The service ticket may be paper as a medium or may be an electronic medium displayed on a smartphone or the like. Hereinafter, a merchandise sales data processing device according to the first embodiment, that is, the POS terminal 10 is referred to as a POS terminal 101.

The POS terminal 101 stores a department table 51 (see FIG. 4). The department table 51 is stored in the auxiliary storage device 13. The department table 51 may be stored in the main memory 12.

FIG. 4 is a schematic diagram showing a data structure of the department table 51. The department table 51 is a data table in which a department name and an exclusion flag Fa are associated with a corresponding department code set for each department into which each merchandise item is classified. The department name is a name of a department classified by the corresponding department code. The exclusion flag Fa is 1-bit data for identifying whether the corresponding department code is an exclusion department. The exclusion department is a department excluded from application of a service. In the first embodiment, the exclusion flag Fa indicating that the corresponding department code is an exclusion department is set to "1", and the exclusion flag Fa indicating that the corresponding department code is not an exclusion department is set to "0".

For example, when a total amount of purchased merchandise items excluding merchandise items belonging to "department A" of a department code "100" is equal to or greater than the set amount, and when a service ticket is issued to a purchaser, the exclusion flag Fa corresponding to the department code "100" is "1". The exclusion flags Fa corresponding to department codes other than the department code "100" are "0". In this case, merchandise items belonging to departments other than the department "department A", i.e., the departments in which the exclusion flag Fa is set to "0" (hereinafter referred to as "a merchandise group to be identified"), are taken into account in service or discount calculation. That is, a merchandise group belonging to the department in which the exclusion flag Fa is set to "0" is the merchandise group to be identified.

For example, when a total amount of purchased merchandise items excluding the merchandise items belonging to the department "department A" of the department code "100" and merchandise items belonging to a department "department C" of a department code "300" is equal to or greater than the set amount, and when a service ticket is issued, the exclusion flag Fa corresponding to the department code "100" and the exclusion flag Fa corresponding to the department code "300" are "1". The exclusion flags Fa corresponding to the department codes other than the department codes "100" and "300" are "0". In this case, merchandise items belonging to departments other than the department "department A" and the department "department C" is the merchandise group to be identified. That is, a merchandise group belonging to the department in which the exclusion flag Fa is set to "0" is the merchandise group to be identified.

FIG. 5 is a schematic diagram showing a main memory area in the main memory 12. As shown, in the POS terminal 101, a part of the main memory 12 is used to store a transaction file 61, a first totalizer 62, a second totalizer 63, and a flag memory area 64 for a registration flag Fb.

The transaction file 61 stores merchandise sales data of purchased merchandise items for one transaction. The first totalizer 62 is an area for storing a total number Ta and a total amount Tb of the purchased merchandise items for one transaction. The second totalizer 63 is an area for storing a total number Tc and a total amount Td of the purchased merchandise items excluding the merchandise items belonging to the exclusion department, that is, the purchased merchandise items belonging to the merchandise group to be identified among the purchased merchandise items for one transaction. The registration flag Fb is 1-bit data for identifying whether the purchased merchandise items for one transaction are being registered. In the embodiment, the registration flag Fb when the purchasing merchandise is not being registered is set to "0", and the registration flag Fb when the purchasing merchandise is being registered is set to "1".

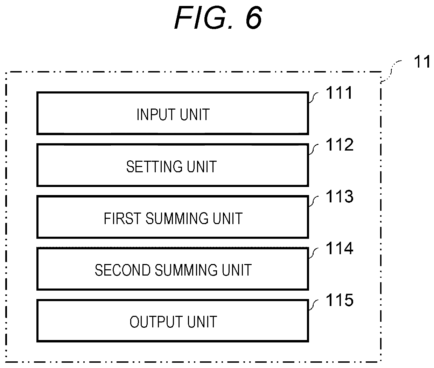

FIG. 6 is a functional block diagram of the POS terminal 101. As shown, the processor 11 of the POS terminal 101 performs the functions of an input unit 111, a setting unit 112, a first summing unit 113, a second summing unit 114, and an output unit 115.

The input unit 111 has a function of inputting information on sales of a merchandise item. The information on sales of a merchandise item is, for example, a merchandise code. For example, the processor 11 acquires a merchandise code from a bar code scanned by the scanner 43. A bar code is not necessarily attached to all of the merchandise items sold at a store. Therefore, the POS terminal 101 can receive a merchandise code that is input via the keyboard 42. The processor 11 acquires the merchandise code that is input by the keyboard 42.

The setting unit 112 has a function of setting a merchandise group to be identified. The merchandise group to be identified is a merchandise group not belonging to any exclusion department. That is, the merchandise group to be identified is a merchandise group belonging to a department in which the exclusion flag Fa in the department table 51 is set to "0". The processor 11 has a function of setting the exclusion flag Fa in the department table 51 to "0" or "1". The processor 11 sets the exclusion flag Fa corresponding to the department of the merchandise group not belonging to the exclusion department to "0". The processor 11 sets the exclusion flag Fa corresponding to the department of the merchandise group belonging to the exclusion department to "1".

The first summing unit 113 has a function of summing up the price of merchandise items for which information on sales is input by the input unit 111. The processor 11 sums up the price of merchandise items. Hereinafter, the sum of the price of merchandise items is referred to as a first total amount.

The second summing unit 114 has a function of summing up the price of the merchandise items belonging to the merchandise group to be identified among the merchandise items for which the information on the sales is input by the input unit 111. The processor 11 sums up the price of the merchandise items belonging to the merchandise group to be identified. Hereinafter, the sum of the price of merchandise items is referred to as a second total amount.

The output unit 115 has a function of outputting the first total amount calculated by the first summing unit 113 and the second total amount calculated by the second summing unit 114. The processor 11 controls the display 44 to output the first total amount and the second total amount. For example, the processor 11 controls the display 44 to output the first total amount and the second total amount side by side on one screen.

The functions as the input unit 111, the setting unit 112, the first summing unit 113, the second summing unit 114, and the output unit 115 are all performed by information processing executed by the processor 11 according to an application program stored in the main memory 12 or the auxiliary storage device 13. A method of installing that program in the main memory 12 or the auxiliary storage device 13 is not particularly limited. The program can be recorded in and copied from a non-transitory computer readable recording medium, or downloaded from an external device via the communication network 30 and then installed in the main memory 12 or the auxiliary storage device 23. The form of the recording medium is not limited as long as the recording medium can store a program and is computer readable, e.g., CD-ROM and a memory card.

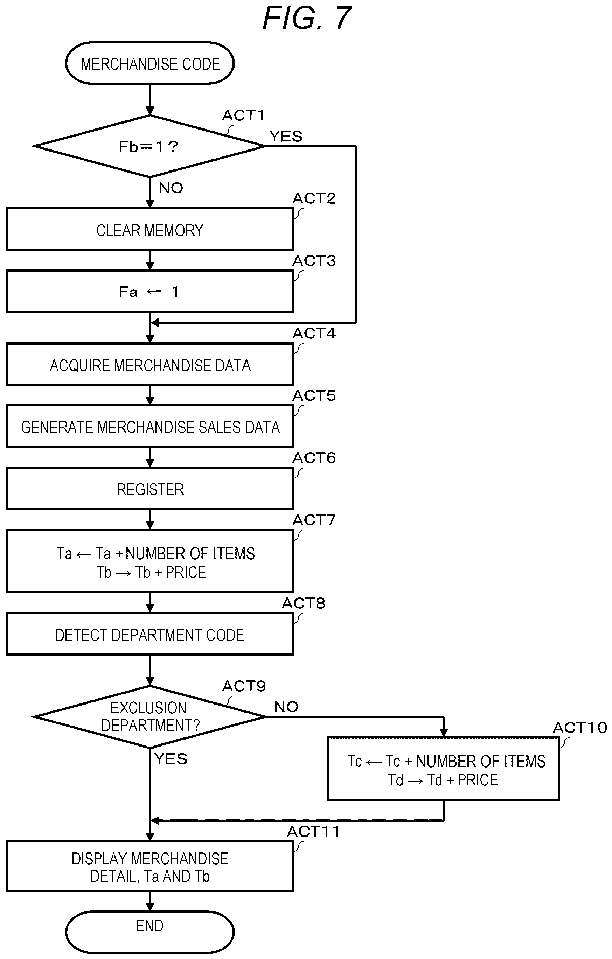

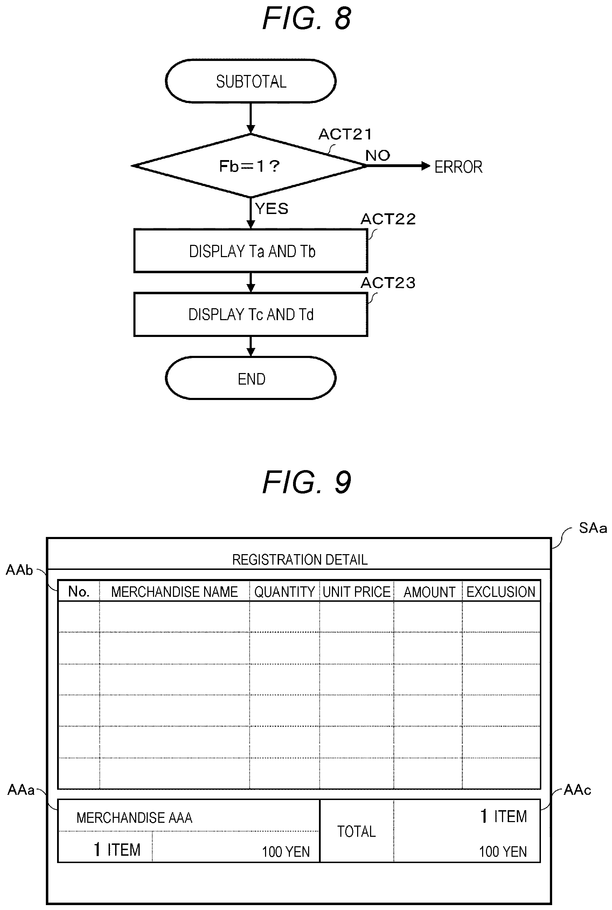

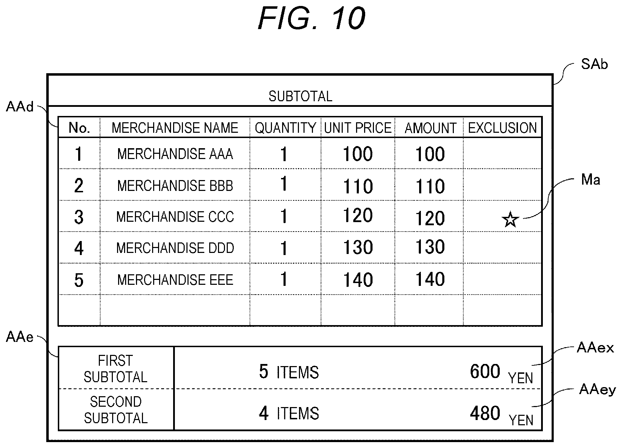

Next, information processing executed by the processor 11 of the POS terminal 101 will be specifically described with reference to flowcharts of FIGS. 7 and 8 and screen examples of FIGS. 9 and 10. The steps of the information processing and its order described with reference to the flowcharts are examples. The steps and the order can be appropriately changed as long as the same operation and effect can be achieved. In the screen examples, text to be output, an arrangement of images, or the like can be appropriately changed.

First, when a purchaser comes to a checkout lane for purchasing merchandise items, a store clerk who is an operator of the POS terminal 101 operates the scanner 43 or the keyboard 42 to input merchandise codes of the merchandise items one by one.

FIG. 7 is a flowchart of information processing executed by the processor 11 in response to input of a merchandise code. When the merchandise code is input via the input unit 111, the processor 11 starts the information processing shown in the flowchart of FIG. 7. First, the processor 11 checks the registration flag Fb in ACT 1. When the registration flag Fb is reset to "0", that is, when the merchandise code is input and no merchandise item has been registered, the processor 11 proceeds from ACT 1 to ACT 2. In ACT 2, the processor 11 initializes the transaction file 61, the first totalizer 62, and the second totalizer 63. In ACT 3, the processor 11 sets the registration flag Fb to "1". Thereafter, the processor 11 proceeds to ACT 4. That is, when the first merchandise item is registered, the processing of ACT 2 and ACT 3 is executed, and the processing proceeds to ACT 4.

On the other hand, when the registration flag Fb is set to "1" in ACT 1, that is, when the merchandise code is input during the registration of merchandise items for one transaction, the processor 11 skips the processing of ACT 2 and ACT 3 and proceeds to ACT 4. As described above, when the first purchasing merchandise item in one transaction is being registered, the processor 11 proceeds to ACT 4 through the processing of ACT 2 and ACT 3. That is, during the registration of the second and subsequent merchandise items, the processor 11 skips the processing of ACT 2 and ACT 3 and proceeds to ACT 4.

In ACT 4, the processor 11 acquires the merchandise data record 22 including the merchandise code. Then, in ACT 5, the processor 11 generates the merchandise sales data based on the merchandise code, the merchandise name, the price, the department code, or the like included in the merchandise data record 22. In ACT 6, the processor 11 registers the merchandise sales data in the transaction file 61. In ACT 7, the processor 11 adds the number of sales items and the sales amount in the merchandise sales data to the total number Ta and the total amount Tb of the first totalizer 62.

In ACT 8, the processor 11 detects the department code from the merchandise sales data. In ACT 9, the processor 11 searches the department table 51 to check the exclusion flag Fa corresponding to the detected department code. When the exclusion flag Fa is "0", the detected department code is not a code of an exclusion department. The processor 11 proceeds from ACT 9 to ACT 10. In ACT 10, the processor 11 adds the number of sales items and the sales amount in the merchandise sales data to the total number Tc and the total amount Td of the second totalizer 63. Thereafter, the processor 11 proceeds to ACT 11. On the other hand, when the exclusion flag Fa is "1", the detected department code is the code of the exclusion department. The processor 11 proceeds from ACT 9 to ACT 11.

As described above, when the detected department code is not the code of the exclusion department, the processor 11 adds the number of sales items and the sales amount in the merchandise sales data to the total number Tc and the total amount Td of the second totalizer 63, and then proceeds to ACT 11. When the detected department code is the code of the exclusion department, the processor 11 proceeds to ACT 11 without adding the number of sales items and the sales amount in the merchandise sales data to the second totalizer 63.

In ACT 11, the processor 11 controls the display 44 and the customer-side display 45 to display the total number Ta and the total amount Tb of the first totalizer 62 together with the merchandise name, the number of sales items, the sales amount, or the like in the merchandise sales data. Thus, the processor 11 ends the information processing shown in the flowchart of FIG. 7.

Here, the processor 11 performs the function as the first summing unit 113 by the processing of ACT 7. The processor 11 performs the function as the second summing unit 114 by the processing of ACT 8 to ACT 10.

FIG. 9 shows an example of a registration screen SAa displayed on the display 44 at a time when the procedure shown in the flowchart of FIG. 7 ends. The registration screen SAa is divided into a current area AAa, a detail area AAb, and a total area AAc. The current area AAa is an area for displaying a merchandise name, the number of sales items, and a sales amount of merchandise items to be purchased. The detail area AAb is an area in which a merchandise name, the number of sales items (quantity), a price (unit price), a sales amount (amount), and an exclusion mark (exclusion) of each merchandise item in one transaction are displayed in a list form in order of a series of numbers. The exclusion field will be described later. The total area AAc is an area for displaying a total purchase quantity and a total sales amount of merchandise items to be purchased in one transaction.

In the processing of ACT 11, a merchandise name, the number of sales items, and a sales amount in the merchandise sales data newly registered in the transaction file 61 in the processing of ACT 6 are displayed in the current area AAa. The total number and the total amount calculated in the processing of ACT 7 are displayed in the total area AAc.

As described above, every time a merchandise code of a merchandise item is input via the input unit 111, the processor 11 repeatedly executes the processing of ACT 1 to ACT 11. As a result, the merchandise sales data of the merchandise items to be purchased for one transaction is stored in the transaction file 61. The first totalizer 62 stores the total number Ta and the total amount Tb of the merchandise items to be purchased for one transaction. The second totalizer 63 stores the total number Tc and the total amount Td of the merchandise items not belonging to the exclusion department, that is, the merchandise group to be identified among the merchandise items to be purchased for one transaction.

When the registration of the merchandise items for the purchaser is completed, the cashier presses the subtotal key of the keyboard 42. When the subtotal key is pressed, a subtotal key signal is input to the processor 11 via the device interface 17.

FIG. 8 is a flowchart showing information processing executed by the processor 11 of the POS terminal 101 in response to the input of the subtotal key signal. When the subtotal key signal is input, the processor 11 starts the information processing shown in the flowchart of FIG. 8. First, the processor 11 checks the registration flag Fb in ACT 21. When the registration flag Fb is reset to "0", the processor 11 determines that an error has occurred and ends the processing. When the registration flag Fb is reset, the state reflects that no merchandise item has been registered yet. Therefore, by ending the processing with an error, the operation of the subtotal key is invalidated.

When the subtotal key is pressed and the registration flag Fb is set to "1", the processor 11 proceeds from ACT 21 to ACT 22. In ACT 22, the processor 11 causes the display 44 and the customer-side display 45 to display the total number Ta and the total amount Tb stored in the first totalizer 62. In ACT 23, the processor 11 causes the display 44 to display the total number Tc and the total amount Td stored in the second totalizer 63. The total number Tc and the total amount Td are not displayed on the customer-side display 45. Thus, the processor 11 ends the information processing of the procedure shown in the flowchart of FIG. 8.

Here, the processor 11 performs the function of the output unit 115 by the processing of ACT 22 and ACT 23.

FIG. 10 shows an example of a subtotal screen SAb displayed on the display 44 at a time when the procedure shown in the flowchart of FIG. 8 ends. The subtotal screen SAb includes a detail area AAd and a subtotal area AAe. The detail area AAd is the same as the detail area AAb on the registration screen SAa. That is, the detail area AAd is an area in which a merchandise name, the number of sales items (quantity), a price (unit price), a sales amount (amount), and an exclusion mark (exclusion) of each merchandise item to be purchased in one transaction are displayed in a list form in order of a series of numbers. At the time when the procedure shown in the flowchart of FIG. 8 ends, the merchandise name, the number of sales items (quantity), the price (unit price), and the sales amount (amount) in the merchandise sales data stored in the transaction file 61 are displayed. An exclusion mark Ma of an asterisk is displayed for a merchandise item determined to belong to the exclusion department in the processing of ACT 9 of FIG. 7.

The subtotal area AAe includes a first subtotal area AAex that displays a total number and a total amount, and a second subtotal area AAey that displays a total number and a total amount in parallel. At a time when the procedure shown in the flowchart of FIG. 8 ends, the total number Ta and the total amount Tb stored in the first totalizer 62 are displayed in the first subtotal area AAex. The total number Tc and the total amount Td stored in the second totalizer 63 are displayed in the second subtotal area AAey.

As described above, when the cashier having finished the registration of the merchandise items purchased by the purchaser presses the subtotal key, the screen of the display 44 is the subtotal screen SAb. On the subtotal screen SAb, the total number Ta and the total amount Tb of the purchased merchandise items for one transaction are displayed in the first subtotal area AAex. Further, the total number Tc and the total amount Td of the purchased merchandise items not belonging to the exclusion department, that is, the merchandise group to be identified are displayed in the second subtotal area AAey. Therefore, when the total amount Td displayed in the second subtotal area AAey is equal to or greater than the set amount which is an application condition of a service or discount, the cashier applies the service or discount to the purchaser. For example, the cashier issues a service ticket such as a point ticket, a coupon, a discount ticket, or an invitation ticket to the purchaser. When the total amount Td is less than the set amount, the cashier does not issue the service ticket to the purchaser.

As described above in detail, the POS terminal 101 displays the total number Tc and the total amount Td of the purchased merchandise items not belonging to the exclusion department, that is, the merchandise group to be identified, on the subtotal screen SAb. Therefore, after checking the subtotal screen SAb, the cashier can easily check the total amount Td required to determine whether to apply the service.

In addition, the POS terminal 101 displays, on one screen of the subtotal screen SAb, the total number Tc and the total amount Td of the merchandise group to be identified together with the total number Ta and the total amount Tb of the purchased merchandise items for one transaction. Therefore, the cashier can determine, based on the subtotal screen SAb, whether to apply the service to the purchaser at the same time as recognizing the total amount Tb which is money to be paid by the purchaser. That is, it is not necessary to perform special work for determining whether to apply the service, and thus the accounting business of the cashier is not hindered.

### [Second Embodiment]

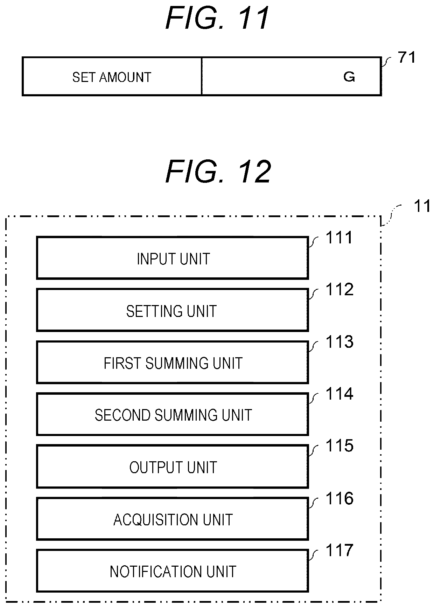

Next, a second embodiment will be described with reference to FIGS. 11 to 14.

Similarly to the first embodiment, the second embodiment also exemplifies the POS terminal 10 suitable for use in a store that issues a service ticket to a purchaser when a total amount of purchased merchandise items excluding merchandise items belonging to a specific department is equal to or greater than a set amount. Hereinafter, the POS terminal 10 in the second embodiment is referred to as a POS terminal 102.

The POS terminal 102 stores the department table 51 similarly to the POS terminal 101 in the first embodiment. In the POS terminal 102, a part of the main memory 12 is used to store the transaction file 61, the first totalizer 62, the second totalizer 63, and the flag memory area 64 for the registration flag Fb.

The POS terminal 102 differs from the POS terminal 101 in that the POS terminal 102 includes a set amount memory 71 (see FIG. 11). The POS terminal 102 includes an area for the set amount memory 71 in the auxiliary storage device 13. The POS terminal 102 may include the area for the set amount memory 71 in the main memory 12.

FIG. 11 is a schematic diagram of a data structure of the set amount memory 71. The set amount memory 71 is an area for storing a set amount G which is an application condition of a service. For example, when the total amount of the purchased merchandise items excluding the merchandise items belonging to the specific department is 300 yen or more, in the store issuing the service ticket, as the set amount G, 300 yen is stored in the set amount memory 71. For example, when the total amount of the purchased merchandise items excluding the merchandise items belonging to the specific department is 500 yen or more, in the store issuing the service ticket, as the set amount G, 500 yen is stored in the set amount memory 71.

The POS terminal 102 is different from the POS terminal 101 in a part of the functional configuration of the processor 11. FIG. 12 is a functional block diagram of the POS terminal 102. As shown, the processor 11 of the POS terminal 102 performs the functions of an acquisition unit 116 and a notification unit 117 in addition to the functions of the input unit 111, the setting unit 112, the first summing unit 113, the second summing unit 114, and the output unit 115.

The acquisition unit 116 has a function of acquiring the set amount G to be compared with the second total amount. The processor 11 acquires the set amount G from the set amount memory 71.

The notification unit 117 has a function of notifying that the second total amount is equal to or greater than the set amount G. When the second total amount is equal to or greater than the set amount G, the processor 11 controls the display 44 to display, for example, a notification mark, to notify the cashier that the second total amount is equal to or greater than the set amount G. For example, the notification unit 117 may control a speaker or the like to notify that the second total amount is equal to or greater than the set amount G by voice.

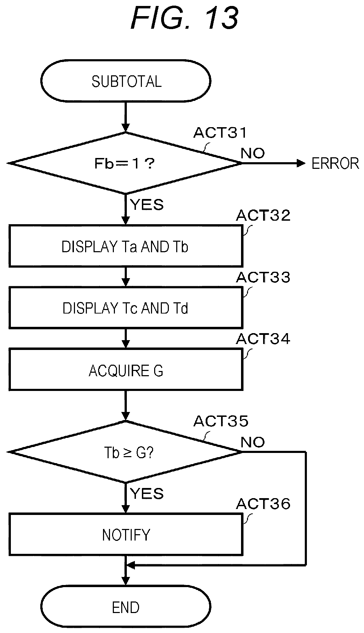

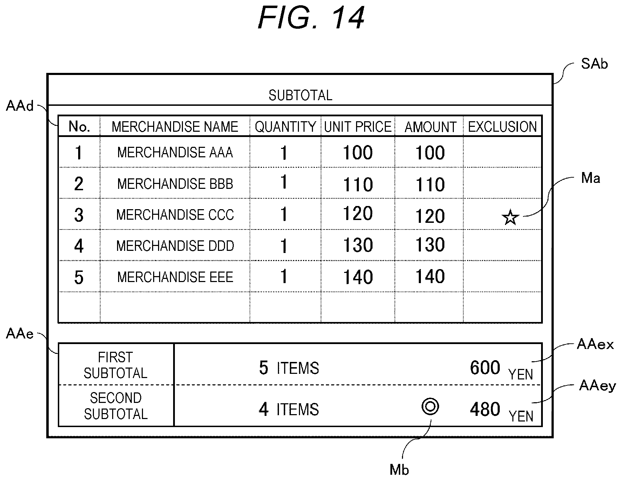

The functions of the acquisition unit 116 and the notification unit 117 are performed by the processor 11 in response to input of a subtotal key signal. Next, the functions of the acquisition unit 116 and the notification unit 117 will be specifically described with reference to a flowchart of FIG. 13 and a screen example of FIG. 14. In the POS terminal 102, similarly to the POS terminal 101 according to the first embodiment, the processor 11 also executes the information processing shown in the flowchart of FIG. 7 in response to input of a merchandise code. Accordingly, the flowchart of FIG. 7 and the screen example of FIG. 9 are also applied to the second embodiment as it is.

FIG. 13 is a flowchart of the information processing executed by the processor 11 of the POS terminal 102 in response to input of a subtotal key signal. When a subtotal key signal is input, the processor 11 starts the information processing shown in the flowchart of FIG. 13. First, the processor 11 checks the registration flag Fb in ACT 31. When the registration flag Fb is reset to "0", the processor 11 determines that an error has occurred and ends the processing.

When the subtotal key is pressed and the registration flag Fb is set to "1", the processor 11 proceeds from ACT 31 to ACT 32. In ACT 32, the processor 11 causes the display 44 and the customer-side display 45 to display the total number Ta and the total amount Tb stored in the first totalizer 62. In ACT 33, the processor 11 causes the display 44 to display the total number Tc and the total amount Td stored in the second totalizer 63. The total number Tc and the total amount Td are not displayed on the customer-side display 45.

Thereafter, in ACT 34, the processor 11 acquires the set amount G from the set amount memory 71. Then, in ACT 35, the processor 11 compares the total amount Td stored in the second totalizer 63 with the set amount G. As a result, when the total amount Td is smaller than the set amount G, the processor 11 ends the information processing of the procedure shown in the flowchart of FIG. 13.

On the other hand, when the total amount Td is equal to the set amount G or the total amount Td is greater than the set amount G, the processor 11 proceeds from ACT 35 to ACT 36. In ACT 36, the processor 11 notifies that the total amount Td is equal to or greater than the set amount G. Specifically, as in the subtotal screen SAb shown in FIG. 14, the processor 11 outputs a notification mark Mb of a double circle near the total amount Td displayed in the second subtotal area AAey. Thus, the processor 11 ends the information processing shown in the flowchart of FIG. 13.

Here, the processor 11 performs the function of the acquisition unit 116 by the processing of ACT 34. The processor 11 performs the function of the notification unit 117 by the processing of ACT 35 and ACT 36.

As described above in detail, when the total amount Td of purchased merchandise items not belonging to the exclusion department, that is, the merchandise group to be identified is equal to or greater than the set amount G, the POS terminal 102 causes the subtotal screen SAb to display the notification mark Mb and notifies the store clerk. Therefore, when the notification mark Mb is displayed on the subtotal screen SAb, the store clerk applies the service to the purchaser. For example, the cashier issues a service ticket such as a point ticket, a coupon, a discount ticket, or an invitation ticket to the purchaser. When the notification mark Mb is not displayed on the subtotal screen SAb, the store clerk does not issue the service ticket to the purchaser. Accordingly, the store clerk can appropriately and easily determine whether to apply the service without mistake.

### [Third Embodiment]

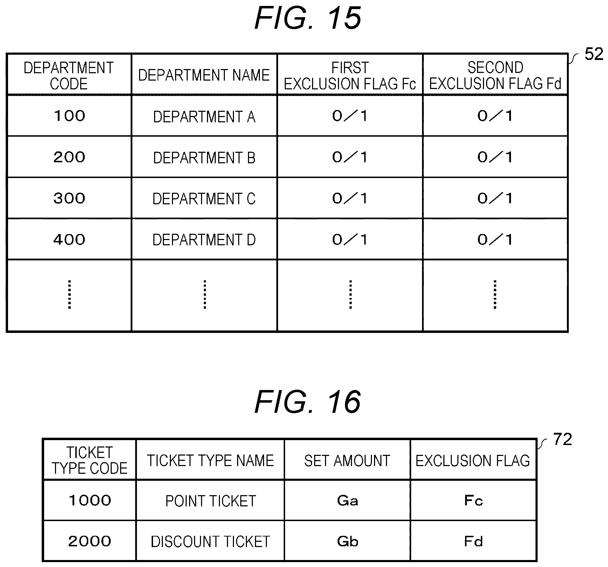

Next, a third embodiment will be described with reference to FIGS. 15 to 21.

In the first and second embodiments, a service ticket is issued to a purchaser when the total amount of purchased merchandise items excluding the merchandise items belonging to specific departments is equal to or greater than a set amount. In the third embodiment, when the total amount of purchased merchandise items excluding the merchandise items belonging to the specific departments is equal to or greater than the set amount, a service ticket held by a purchaser is validated. There are two types of service tickets including a point ticket for giving points to a purchaser and a discount ticket for applying a discount to a subtotal amount of purchased merchandise items. The service ticket may be paper as a medium or may be an electronic medium displayed on a smartphone or the like. Hereinafter, the POS terminal 10 in the third embodiment is referred to as a POS terminal 103.

The POS terminal 103 stores a department table 52 (see FIG. 15) and a ticket type table 72 (see FIG. 16). The department table 52 and the ticket type table 72 are stored in the auxiliary storage device 13. The department table 52 and the ticket type table 72 may be stored in the main memory 12.

FIG. 15 is a schematic diagram showing a data structure of the department table 52. The department table 52 is a data table in which a department name, a first exclusion flag Fc, and a second exclusion flag Fd are associated with a department code set for each department into which each merchandise item is classified. The department name is a name of a department classified by the corresponding department code. Each of the first exclusion flag Fc and the second exclusion flag Fd is 1-bit data for identifying whether the corresponding department code is an exclusion department. The exclusion department is a department excluded from application of a service. In one embodiment, the exclusion flag Fc and the exclusion flag Fd indicating that the corresponding department code is an exclusion department are set to "1", and the exclusion flag Fc and the exclusion flag Fd indicating that the corresponding department code is not an exclusion department are set to "0".

FIG. 16 is a schematic diagram showing a data structure of the ticket type table 72. The ticket type table 72 is a data table in which a ticket type name, a set amount, and exclusion flag identification data are associated with a ticket type code of each service ticket. The ticket type code is a code attached to each service ticket in order to identify the service ticket that is valid when the total amount of purchased merchandise items excluding the merchandise items belonging to the specific department is equal to or greater than the set amount. In one embodiment, there are two types of service tickets including a point ticket and a discount ticket. A bar code representing the ticket type code of a point ticket is attached to the point ticket. A bar code representing the ticket type code of a discount ticket is attached to the discount ticket.

The ticket type name is a name of the service ticket specified by the ticket type code. In one embodiment, a ticket type name of a ticket type code " 1000" is a point ticket, and a ticket type name of a ticket type code "2000" is a discount ticket.

The set amount is an amount at which the service ticket specified by the ticket type code is valid. That is, the point ticket is valid when the total amount of purchased merchandise items excluding the merchandise items belonging to the specific department is equal to or greater than a set amount Ga. The discount ticket is valid when the total amount of the purchased merchandise items excluding the merchandise items belonging to the specific department is equal to or greater than a set amount Gb.

The exclusion flag identification data is identification data of an exclusion flag applied to the service ticket specified by the ticket type code. That is, the first exclusion flag Fc is applied to the point ticket. The second exclusion flag Fd is applied to the discount ticket.

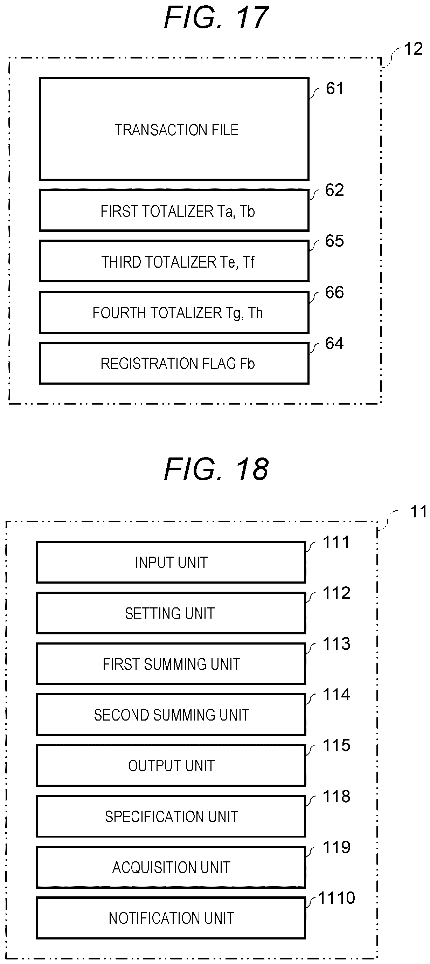

FIG. 17 is a schematic diagram showing a main memory area in the main memory 12. As shown, in the POS terminal 103, a part of the main memory 12 is used to store the transaction file 61, the first totalizer 62, a third totalizer 65, a fourth totalizer 66, and the flag memory area 64 for the registration flag Fb. The transaction file 61, the first totalizer 62, and the flag memory area 64 are the same as those in the first embodiment, and a description thereof is omitted here.

The third totalizer 65 is an area for storing a total number Te and a total amount Tf of purchased merchandise items excluding the merchandise items belonging to the exclusion department specified by the first exclusion flag Fc, that is, purchased merchandise items belonging to a first merchandise group to be identified, among all the purchased merchandise items for one transaction. The fourth totalizer 66 is an area for storing a total number Tg and a total amount Th of purchased merchandise items excluding the merchandise items belonging to the exclusion department specified by the second exclusion flag Fd, that is, purchased merchandise items belonging to a second merchandise group to be identified, among all the purchased merchandise items for one transaction.

FIG. 18 is a functional block diagram of the POS terminal 103. As shown, the processor 11 of the POS terminal 103 performs the functions of the input unit 111, the setting unit 112, the first summing unit 113, the second summing unit 114, the output unit 115, a specification unit 118, an acquisition unit 119, and a notification unit 1110. The input unit 111, the setting unit 112, the first summing unit 113, the second summing unit 114, and the output unit 115 are the same as those in the first embodiment, and the description thereof is omitted.

The specification unit 118 has a function of specifying a service to be applied to the current transaction from a plurality of types of service. When a bar code read by the scanner 43 represents the ticket type code of a point ticket, the processor 11 applies a service of validating the point ticket and giving points. When a bar code read by the scanner 43 represents the ticket type code of a discount ticket, the processor 11 applies a service of validating the discount ticket and performing subtotal discount.

The acquisition unit 119 has a function of acquiring a set amount for the service specified by the specification unit 118. When a point ticket is specified by the specification unit 118, the processor 11 acquires the set amount Ga associated with the ticket type code" 1000" from the ticket type table 72. When a discount ticket is specified by the specification unit 118, the processor 11 acquires the set amount Gb associated with the ticket type code "2000" from the ticket type table 72.

The notification unit 1110 has a function of notifying that a service is valid when a total amount of merchandise items belonging to a merchandise group to be identified set for the service specified by the specification unit 118 is equal to or greater than a set amount acquired by the acquisition unit 119. When a point ticket is specified by the specification unit 118, the processor 11 acquires the exclusion flag identification data "Fc" associated with the ticket type code "1000" from the ticket type table 72. When the total amount of the purchased merchandise items belonging to the department in which the first exclusion flag Fc identified by the exclusion flag identification data "Fc" is set to "0" is equal to or greater than the set amount Ga, the processor 11 notifies that the point ticket is valid.

When a discount ticket is specified by the specification unit 118, the processor 11 acquires the exclusion flag identification data "Fd" associated with the ticket type code "2000" from the ticket type table 72. When the total amount of the purchased merchandise items belonging to the department in which the second exclusion flag Fd identified by the exclusion flag identification data "Fd" is set to "0" is equal to or greater than the set amount Gb, the processor 11 notifies that the discount ticket is valid. For example, the processor 11 controls the display 44 to display the ticket type name of the valid service ticket to notify the cashier. For example, the processor 11 may control a speaker or the like to output the ticket type name of the valid service ticket by voice to notify the cashier.

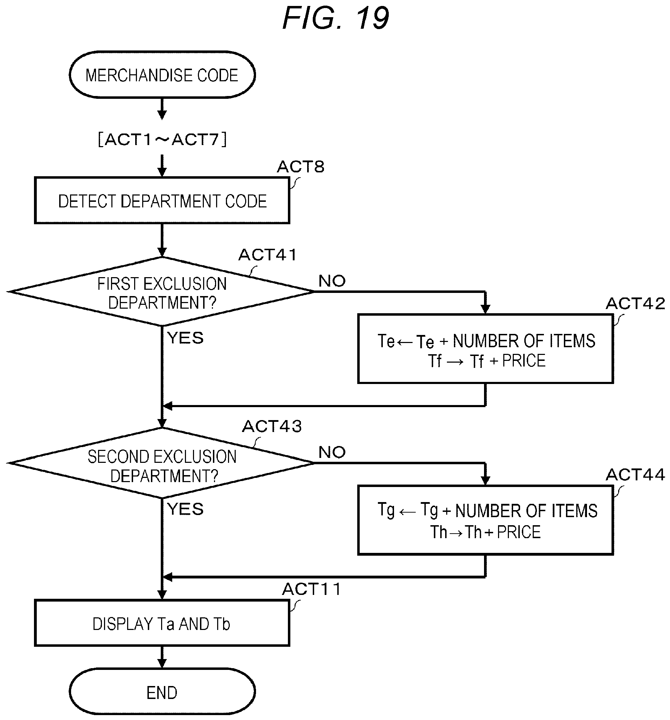

FIG. 19 is a flowchart of information processing executed by the processor 11 of the POS terminal 103 in response to input of a merchandise code. As shown, when the merchandise code is input via the input unit 111, the processor 11 executes the same processing as in the first embodiment in ACT 1 to ACT 8. That is, when the registration flag Fb is reset to "0", the processor 11 initializes data of the transaction file 61, the first totalizer 62, the third totalizer 65, and the fourth totalizer 66 in ACT 2. In ACT 3, the processor 11 sets the registration flag Fb to "1". When the registration flag Fb is set to "1", the processor 11 skips the processing of ACT 2 and ACT 3.

Next, the processor 11 acquires the merchandise data record 22 including the merchandise code in ACT 4 and generates the merchandise sales data in ACT 5. Then, the processor 11 registers the merchandise sales data in the transaction file 61 in ACT 6, and adds the number of sales items and the sales amount in the merchandise sales data to the total number Ta and the total amount Tb of the first totalizer 62 in ACT 7.

Next, the processor 11 detects the department code from the merchandise sales data in ACT 8. Then, the processor 11 checks whether the detected department code is a first exclusion department in ACT 41. The first exclusion department is a department for which the first exclusion flag Fc is set to " 1". When the detected department code is not the first exclusion department, the processor 11 proceeds to ACT 42. In ACT 42, the processor 11 adds the number of sales items and the sales amount in the merchandise sales data to the total number Te and the total amount Tf of the third totalizer 65. When the detected department code is the first exclusion department, the processor 11 skips the processing of ACT 42.

As described above, when the detected department code is not the first exclusion department, the processor 11 adds the number of sales items and the sales amount in the merchandise sales data to the total number Te and the total amount Tf of the third totalizer 65. When the detected department code is the first exclusion department, the processor 11 does not add the number of sales items and the sales amount in the merchandise sales data to the total number Te and the total amount Tf of the third totalizer 65.

Next, the processor 11 checks whether the detected department code is a second exclusion department in ACT 43. The second exclusion department is a department for which the second exclusion flag Fd is set to "1". When the detected department code is not the second exclusion department, the processor 11 proceeds to ACT 44. In ACT 44, the processor 11 adds the number of sales items and the sales amount in the merchandise sales data to the total number Tg and the total amount Th of the fourth totalizer 66. When the detected department code is the second exclusion department, the processor 11 skips the processing of ACT 44.

As described above, when the detected department code is not the second exclusion department, the processor 11 adds the number of sales items and the sales amount in the merchandise sales data to the total number Tg and the total amount Th of the fourth totalizer 66. When the detected department code is the second exclusion department, the processor 11 does not add the number of sales items and the sales amount in the merchandise sales data to the total number Tg and the total amount Th of the fourth totalizer 66.

Thereafter, the processor 11 executes the processing of ACT 11 in the first embodiment. That is, the processor 11 controls the display 44 and the customer-side display 45 to display the total number Ta and the total amount Tb of the first totalizer 62 together with the merchandise name, the number of sales items, the sales amount, or the like in the merchandise sales data. Thus, the processor 11 ends the information processing shown in the flowchart of FIG. 19.

Here, the processor 11 has a function of the second summing unit that sums up price of merchandise items belonging to the merchandise group to be identified for each type of the service by the processing of ACT 42 and ACT 44.

The processor 11 executes the information processing shown in the flowchart of FIG. 19 when the merchandise code is input via the input unit 111. Accordingly, the merchandise sales data of the purchased merchandise items for one transaction is stored in the transaction file 61. The first totalizer 62 stores the total number Ta and the total amount Tb of the purchased merchandise items for one transaction. The third totalizer 65 stores the total number Te and the total amount Tf of the purchased merchandise items not belonging to the first exclusion department, that is, the first merchandise group to be identified, among all the purchased merchandise items for one transaction. The fourth totalizer 66 stores the total number Tg and the total amount Th of the purchased merchandise items not belonging to the second exclusion department, that is, the second merchandise group to be identified, among all the purchased merchandise items for one transaction.

When the registration of the purchased merchandise items for the purchaser is completed, the cashier presses the subtotal key of the keyboard 42. When the subtotal key is pressed, a subtotal key signal is input to the processor 11 via the device interface 17. When the purchaser holds a point ticket or a discount ticket, the cashier reads, by the scanner 43, a bar code attached to the point ticket or the discount ticket. When the bar code is read by the scanner 43, a ticket type code represented by the bar code is input to the processor 11.

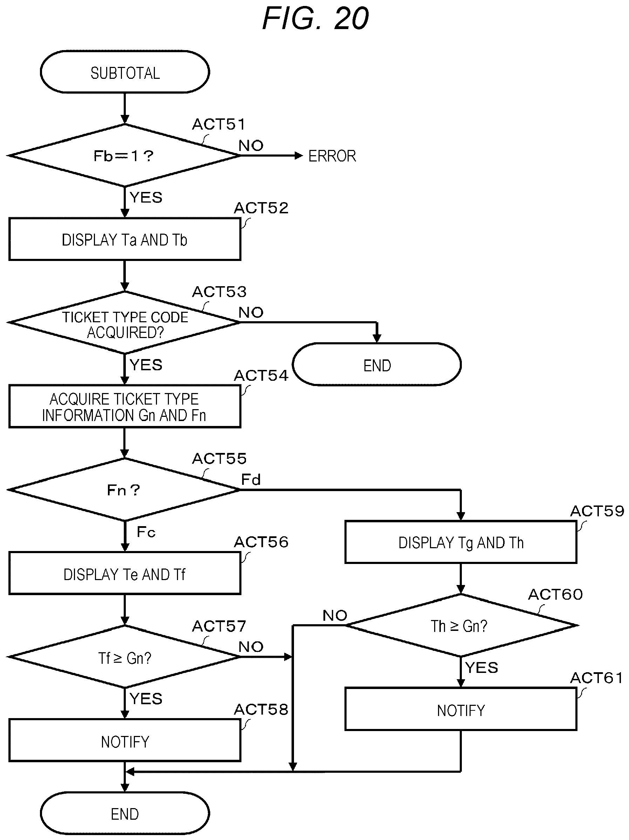

FIG. 20 is a flowchart of the information processing executed by the processor 11 of the POS terminal 103 in response to input of the subtotal key signal. When the subtotal key signal is input, the processor 11 starts the information processing shown in the flowchart of FIG. 20. First, the processor 11 checks the registration flag Fb in ACT 51. When the registration flag Fb is reset to "0", the processor 11 determines that an error has occurred and ends the processing.

When the subtotal key is pressed and the registration flag Fb is set to "1", the processor 11 proceeds from ACT 51 to ACT 52. In ACT 52, the processor 11 causes the display 44 and the customer-side display 45 to display the total number Ta and the total amount Tb stored in the first totalizer 62.

Next, the processor 11 checks whether the ticket type code is acquired in ACT 53. When the ticket type code is not acquired, the processor 11 ends the information processing of the procedure shown in the flowchart of FIG. 20.

On the other hand, when the ticket type code is acquired, the processor 11 proceeds from ACT 53 to ACT 54. In ACT 54, the processor 11 searches the ticket type table 72 to acquire a set amount Gn associated with the ticket type code and an exclusion flag identification data Fn. In ACT 55, the processor 11 specifies an exclusion flag identified by the exclusion flag identification data Fn. When the exclusion flag identification data Fn is data for identifying the first exclusion flag Fc, the processor 11 proceeds from ACT 55 to ACT 56. In ACT 56, the processor 11 causes the display 44 to display the total number Te and the total amount Tf stored in the third totalizer 65.

The processor 11 proceeds to ACT 57. In ACT 57, the processor 11 compares the total amount Tf stored in the third totalizer 65 with the set amount Gn. As a result, when the total amount Tf is smaller than the set amount Gn, the processor 11 ends the information processing shown in the flowchart of FIG. 20.

On the other hand, when the total amount Tf is equal to the set amount Gn or the total amount Tf is greater than the set amount Gn, the processor 11 proceeds from ACT 57 to ACT 58. In ACT 58, the processor 11 notifies that the total amount Tf is equal to or greater than the set amount Gn. Thus, the processor 11 ends the information processing of the procedure shown in the flowchart of FIG. 13.

On the other hand, in ACT 55, when the exclusion flag identification data Fn is data for identifying the second exclusion flag Fd, the processor 11 proceeds from ACT 55 to ACT 59. In ACT 59, the processor 11 causes the display 44 to display the total number Tg and the total amount Th stored in the fourth totalizer 66.

The processor 11 proceeds to ACT 60. In ACT 60, the processor 11 compares the total amount Th stored in the fourth totalizer 66 with the set amount Gn. As a result, when the total amount Th is smaller than the set amount Gn, the processor 11 ends the information processing of the procedure shown in the flowchart of FIG. 20.

On the other hand, when the total amount Th is equal to the set amount Gn or the total amount Th is greater than the set amount Gn, the processor 11 proceeds from ACT 60 to ACT 61. In ACT 61, the processor 11 notifies that the total amount Th is equal to or greater than the set amount Gn. Thus, the processor 11 ends the information processing of the procedure shown in the flowchart of FIG. 13.

Here, the processor 11 performs the function of the specification unit 118 by the processing of ACT 53. The processor 11 performs the function of the acquisition unit 119 by the processing of ACT 54. The processor 11 performs the function of the output unit 115 by the processing of ACT 56 and ACT 59. The processor 11 performs the function of the notification unit 1110 by the processing of ACT 58 and ACT 61.

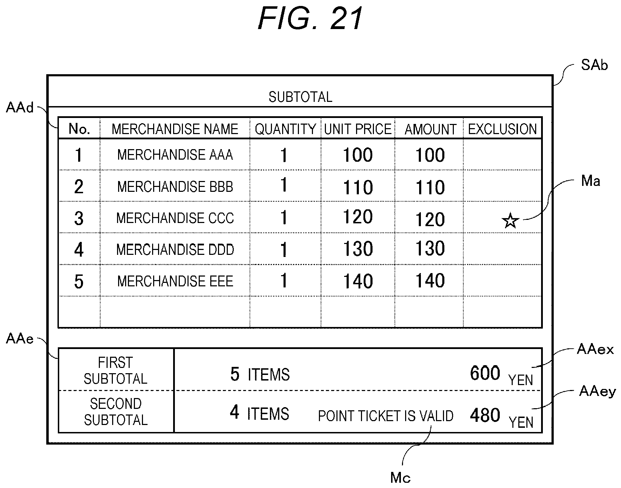

FIG. 21 is a display example of the subtotal screen SAb when a purchaser holds a point ticket and when the total amount Tf of the purchased merchandise items belonging to the department in which the first exclusion flag Fc is set to "0" is equal to or greater than the set amount Ga and the point ticket is valid. As shown, in the second subtotal area AAey, a notification mark Mc of "point ticket is valid" is displayed by the function as the notification unit 1110. Therefore, the cashier can recognize that the point ticket held by the purchaser is valid by viewing the notification mark Mc.

### [Modification]

Information on sales of a merchandise item input by the input unit 111 is not limited to a merchandise code. For example, in a merchandise sales data processing device that performs merchandise registration by inputting a department code of a purchased merchandise item through a department key disposed on the keyboard 42, the information on sales of a merchandise item is the department code.

The setting unit 112 is not limited to a unit that sets the exclusion flag Fa of the department table 51 to "0" or "1". For example, a part of the main memory 12 is set as an exclusion department memory. A unit that sets a department code to be excluded in the exclusion department memory may be the setting unit 112.

The output unit 115 is not limited to a unit that outputs the first total amount and the second total amount to display them on the subtotal screen SAb displayed on the display 44. An image, in which the second total amount is displayed on the subtotal screen SAb on which the first total amount is displayed, may be displayed by a pop-up display method.

The notification unit 117 is not limited to a unit that displays the notification mark Mb. For example, the notification may be performed by lighting or blinking an LED provided in the POS terminal 10. It is only necessary to notify the cashier that the service is applied. The same applies to the notification unit 1110.

While certain embodiments of the disclosure have been described, these embodiments have been presented as examples, and are not intended to limit the scope of the disclosure. Such new embodiments can be implemented in other various forms, and various omissions, replacements, and changes can be made without departing from the scope of the disclosure. These embodiments and the modifications thereof are included in the scope of the disclosure and are also included in the disclosure described in the claims and an equivalent scope thereof.

## Claims

1. A point of sale (POS) terminal for registering items for purchase at a store, comprising:
a display;
a memory that stores:
first data that associates a plurality of items sold at the store with a plurality of predetermined groups, and
second data that associates each of the groups with a flag indicating whether a price of an item associated with the group is to be excluded from a total amount of purchased items for a particular service to be provided by the store; and
a processor configured to:
register a plurality of items for purchase,
calculate a first total amount of all of the registered items,
calculate a second total amount of one or more of the registered items belonging to one or more of the groups each associated with the flag indicating that a price of an item associated with the group is not to be excluded from a total amount of purchased items for the particular service to be provided by the store, and
control the display to display the first and second total amounts.

2. The POS terminal according to claim 1, wherein the processor is configured to:
acquire a preset amount,
compare the second total amount with the preset amount, and
issue a notification signal when the second total amount is equal to or greater than the preset amount.

3. The POS terminal according to claim 2, wherein the processor is configured to control the display to display a mark adjacent to the second total amount when issuing the notification signal.

4. The POS terminal according to any one of claims 1 to 3, wherein
the second data further associates each of the groups with another flag indicating whether a price of an item belonging to the group is to be excluded from a total amount of purchased items for another service to be provided by the store, and
the processor is configured to:
calculate a third total amount of one or more of the registered items belonging to one or more of the groups each associated with said another flag indicating that a price of an item associated with the group is not to be excluded from a total amount of purchased items for said another service to be provided by the store, and
control the display to display the first total amount and either the second or the third total amount.

5. The POS terminal according to claim 4, further comprising:
a scanner, wherein
the processor is configured to:
upon receipt of a service code via the scanner, determine a type of service to be provided corresponding to the service code,
acquire a preset amount that is preset for the determined type of service,
compare the preset amount with the second or third total amount corresponding to the determined type of service, and
issue a notification signal when the second or third total amount is equal to or greater than the preset amount.

6. The POS terminal according to claim 5, wherein the processor is configured to, when issuing the notification signal, control the display to display a message indicating that the service can be provided.

7. The POS terminal according to claim 5 or 6, wherein the particular service is to issue a point ticket and said another service is to issue a discount ticket.

8. A method performed by a point of sale (POS) terminal for registering items for purchase at a store, the method comprising:
storing in a memory:
first data that associates a plurality of items sold at the store with a plurality of predetermined groups, and
second data that associates each of the groups with a flag indicating whether a price of an item associated with the group is to be excluded from a total amount of purchased items for a particular service to be provided by the store;
registering a plurality of items for purchase;
calculating a first total amount of all of the registered items;
calculating a second total amount of one or more of the registered items belonging to one or more of the groups each associated with the flag indicating that a price of an item associated with the group is not to be excluded from a total amount of purchased items for the particular service to be provided by the store; and
displaying the first and second total amounts.

9. The method according to claim 8, further comprising:
acquiring a preset amount;
comparing the second total amount with the preset amount; and
issuing a notification signal when the second total amount is equal to or greater than the preset amount.

10. The method according to claim 9, further comprising:
displaying a mark adjacent to the second total amount upon issuance of the notification signal.

11. The method according to any one of claims 8 to 10, wherein
the second data further associates each of the groups with another flag indicating whether a price of an item belonging to the group is to be excluded from a total amount of purchased items for another service to be provided by the store, and
the method further comprises:
calculating a third total amount of one or more of the registered items belonging to one or more of the groups each associated with said another flag indicating that a price of an item associated with the group is not to be excluded from a total amount of purchased items for said another service to be provided by the store; and
displaying the first total amount and either the second or the third total amount.

12. The method according to claim 11, further comprising:
upon receipt of a service code from a scanner, determining a type of service to be provided corresponding to the service code;
acquiring a preset amount that is preset for the determined type of service;
comparing the preset amount with the second or third total amount corresponding to the determined type of service; and
issuing a notification signal when the second or third total amount is equal to or greater than the preset amount.

13. The method according to claim 12, further comprising:
upon issuance of the notification signal, displaying a message indicating that the service can be provided.

14. The method according to claim 12 or 13, wherein the particular service is to issue a point ticket and said another service is to issue a discount ticket.

15. A non-transitory computer readable medium storing a program causing a computer to execute a method according to any one of claims 10 to 14.
